# EUROPÄISCHE PATENTSCHRIFT

(11) **EP 2 748 028 B1**
(45) Veröffentlichungstag und Bekanntmachung des Hinweises auf die Patenterteilung: **14.10.2015**
(21) Anmeldenummer: 12745407.2
(22) Anmeldetag: 03.08.2012
(51) Int. Cl.: B60N 2/225

(54) **VERSTELLBESCHLAG MIT EINEM AXIALSPERRSYSTEM ZUR ABLAUFSICHERUNG**
ADJUSTMENT FITTING WITH AN AXIAL LOCKING SYSTEM FOR BLOCKING AN INFINITELY VARIABLE MOVEMENT
FERRURE DE RÉGLAGE POURVUE D'UN SYSTÈME DE BLOCAGE AXIAL DESTINÉ À SÉCURISER LE FONCTIONNEMENT

(30) Priorität: 27.08.2011 DE 102011111853
(43) Veröffentlichungstag der Anmeldung: 02.07.2014
(73) Patentinhaber: Sitech Sitztechnik, 38442 Wolfsburg (DE)
(72) Erfinder: BARKOW, Tomas, 38102 Braunschweig (DE); SZUMLANSKI, Bartosz, PL-59-300 Lubin (PL)
(74) Vertreter: Wöhltjen, Karsten
(86) Internationale Anmeldenummer: PCT/EP2012/003312
(87) Internationale Veröffentlichungsnummer: WO 2013/029737

(56) Entgegenhaltungen:
- DE-A1- 10 157 274
- DE-B4-102007 010 078
- DE-C1- 19 548 809

## Beschreibung

Die Erfindung betrifft einen Verstellbeschlag, insbesondere für einen Fahrzeugsitz.

Verstellbeschläge für Fahrzeugsitze, insbesondere für einen Kraftfahrzeugsitz sind in vielfältigen Ausbildungen bekannt. Sie weisen in einer sich regelmäßig wiederholenden Grundausbildung zumeist ein erstes, scheibenförmiges Beschlagteil auf, an welchem ein Hohlzahnkranz ausgebildet ist, und ein relativ zum ersten Beschlagteil um eine Drehachse des Verstellbeschlages verdrehbares zweites, scheibenförmiges Beschlagteil, an welchem ein Stirnzahnrad ausgebildet ist, welches mit dem Hohlzahnkranz kämmt, wodurch die beiden Beschlagteile miteinander in Getriebeverbindung stehen. Die Verstellbeschläge umfassen ferner ein drehbar gelagertes, von einem Mitnehmer angetriebenes Exzentermittel zum Antrieb einer relativen Abwälzbewegung von Stirnzahnrad und Hohlzahnkranz.

Die Druckschrift DE 20 2009 007 513 U1 offenbart einen solchen Verstellbeschlag für einen Fahrzeugsitz mit einem ersten Beschlagteil, an welchem ein Zahnkranz ausgebildet ist und einem zweiten Beschlagteil, an welchem ein Zahnrad ausgebildet ist. Das Zahnrad kämmt den Zahnkranz, wodurch die beiden Beschlagteile miteinander in Getriebeverbindung stehen. Der Beschlag umfasst ferner einen drehbar gelagerten, von einem Mitnehmer angetriebenen, umlaufenden Exzenter zum Antrieb einer relativen Abwälzeinrichtung von Zahnrad und Zahnkranz, wobei die beiden Beschlagteile in baulicher Hinsicht zusammen eine scheibenförmige Einheit bilden.

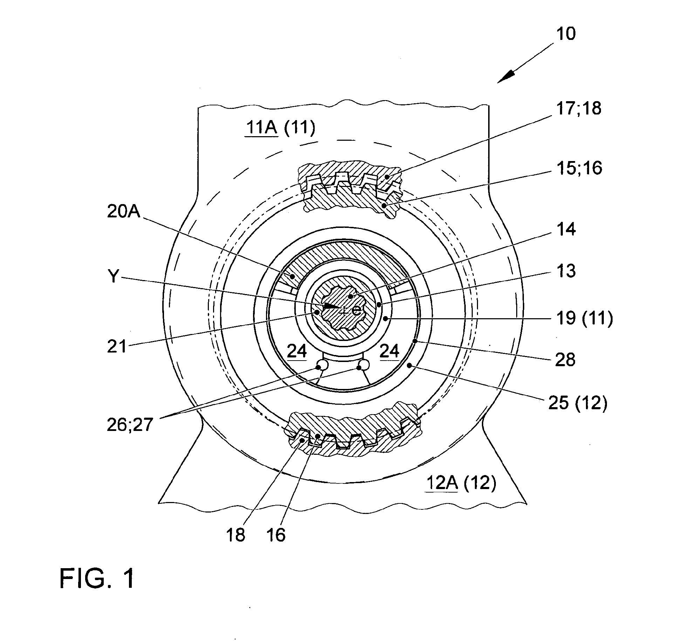

Ein Beschlag dieser Art wird in Figur 1 gezeigt. Figur 1 zeigt in einer Schnittdarstellung, quer zur Drehachse/Schwenkachse Y einen möglichen Aufbau eines Beschlages, insbesondere eines Lehneneinstellbeschlages 10.

Der auf einer oder auf beiden Sitzlängsseiten eines Fahrzeuges angeordnete und ein Sitzteil mit einer Rückenlehne verbindende Lehneneinstellbeschlag 10 weist ein mit dem Sitzteil verbundenes festes, zweites Beschlagteil 12 und ein mit der Rückenlehne verbundenes, gegenüber dem zweiten Beschlagteil 12 verstellbares, erstes Beschlagteil 11 auf, die mittels einer ein Exzenterantriebsmittel 14 als Stellglied aufweisenden Nabe 21 miteinander verbunden und auf einer gemeinsamen Schwenkachse Y angeordnet sind, die Bestandteil einer als Getriebe ausgebildeten Ver- und Feststelleinrichtung sind.

Zu diesem Getriebe gehört ein beispielsweise durch Ausprägen aus dem zweiten Beschlagteil 12 gebildetes Stirnzahnrad 15 mit einer Außenverzahnung 16, die mit der Innenverzahnung 18 eines beispielsweise ebenfalls durch Ausprägen gebildeten Hohlzahnkranzes 17 des ersten Beschlagteiles 11 kämmt.

Der Durchmesser des Kopfkreises der Außenverzahnung 16 ist um wenigstens eine Zahnhöhe kleiner als der Durchmesser des Fußkreises der Innenverzahnung 18. Demgemäß weisen die Verzahnungen 16 und 18 Zähnezahlen auf, die sich um wenigstens einen Zahn unterscheiden, wobei die Zähnezahl der Innenverzahnung 18 größer ist als die Zähnezahl der Außenverzahnung 16. Die dargestellte Anordnung ist derart gewählt, dass sich die Außenverzahnung 16 an der Innenverzahnung 18 abwälzen kann.

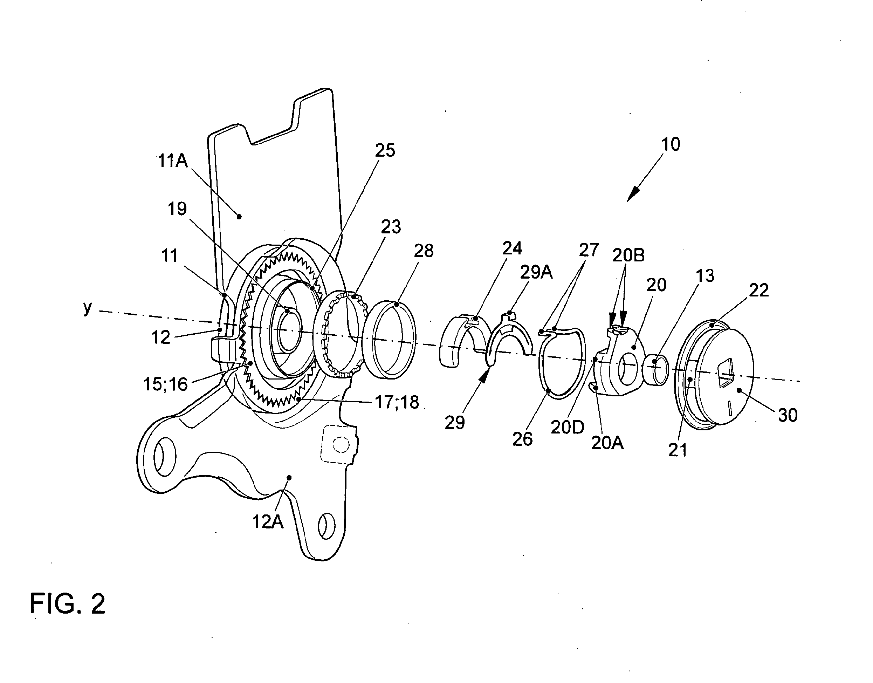

Das erste Beschlagteil 11 weist konzentrisch zu seiner Innenverzahnung 18 einen ersten Kragenzug 19 auf, an welchem ein beispielsweise als Buchse ausgebildeter Mitnehmer 20 gelagert ist. Dieser vorzugsweise aus Kunststoff ausgebildete Mitnehmer 20 sitzt auf der Nabe 21, die mit ihrem Außenmantel im ersten Kragenzug 19 des ersten Beschlagteiles 11 drehbar gelagert ist, wobei der Mitnehmer 20 ein den Kragenzug 19 bereichsweise übergreifendes und in radialem Abstand zur Nabe 21 angeordnetes Mitnehmersegment 20A aufweist, das seinerseits ebenso wie die Nabe 21 an der Außenseite des Lehneneinstellbeschlages 10 in eine den Getriebebereich übergreifende Abdeckscheibe 30 übergeht, die erst in Figur 2 gezeigt ist. Die Nabe 21 ist vorzugsweise über eine im ersten Kragenzug 19 angeordnete erste Gleitlagerbuchse 13 leichtgängig drehbar gelagert. Die Abdichtung der Außenseite des Lehneneinstellbeschlages 10 erfolgt über eine Dichtung 22, die ebenfalls erst in Figur 2 gezeigt ist (Figur 2).

In der Ebene des den ersten Kragenzug 19 übergreifenden Mitnehmersegmentes 20A sind an dem ersten Kragenzug 19 zwei Keilsegmente 24 mit ihren Innenumfangsmantelflächen abgestützt, die mit ihren Außenumfangsmantelflächen an einem im Stirnzahnrad 15 des zweiten Beschlagteiles 12 fixierten Lagerring 25, der als zweiter Kragenzug ausgebildet ist, in direkter Berührung stehen oder es ist wie in der dargestellten Ausführungsform in radialer Richtung gesehen zwischen Stirnzahnrad 15 und den Keilsegmenten 24 eine weitere zweite Gleitlagerbuchse 28 angeordnet, die ebenfalls dazu dient für eine Leichtgängigkeit des Lehneneinstellbeschlages 10 zu sorgen.

Während die schmalen Stirnseiten der Keilsegmente 24 sich bei Feststelllage des Lehneneinstellbeschlages 10 in geringem Abstand zum Mitnehmersegment 20A befinden, sind die breiten Stirnseiten der Keilsegmente 24 durch die Federschenkel 27 einer Ringfeder 26 im Sinne einer Auseinanderspreizung beaufschlagt.

Diese Keilsegmente 24 erzeugen zusammen mit dem ersten Kragenzug 19 des ersten Beschlagteiles 11 innerhalb des Lehneneinstellbeschlages 10 einen Exzenterabschnitt, durch welchen das Stirnzahnrad 15 mit seiner Außenverzahnung 16 in die Innenverzahnung 18 des Hohlzahnkranzes 17 des ersten Beschlagteiles 11 in radialer Verlängerung des Exzenterhöchstpunktes im Eingriff gehalten ist.

Durch die Keilsegmente 24 (und die Ringfeder 26) wird im Lehneneinstellbeschlag 10 ein Exzenter mit dem Exzenterabschnitt definiert, welcher in radialer Verlängerung des Exzenterhöchstpunktes unter Ausbildung einer Exzentrizität das Stirnzahnrad 15 an einer so definierten Eingriffsstelle in das Hohlzahnrad 17 drückt.

Bei einem Antrieb durch das sich drehende Exzenterantriebsmittel 14 wird über die Nabe 21 ein Drehmoment zunächst auf den Mitnehmer 21 und mittels des Mitnehmersegmentes 20A auf den soeben definierten Exzenter übertragen, welcher unter Verlagerung der Eingriffsstelle des Stirnzahnrades 15 im Hohlzahnrad 17 entlang der zweiten Gleitlagerbuchse 28 gleitet, wodurch die Taumelbewegung des Lehneneinstellbeschlages 10 zu Stande kommt. Die Neigung der Rückenlehne ist dadurch zwischen mehreren Gebrauchsstellungen stufenlos einstellbar. In Abhängigkeit der Montage des Lehneneinstellbeschlages 10 wird der Exzenter, gebildet durch die Keilsegmente 24, wie in Figur 1 dargestellt, vom ersten Beschlagteil 11 gelagert, während er seinerseits das zweiten Beschlagteil 12 lagert oder die Verhältnisse sind genau umgekehrt, das heißt der Exzenter wird vom zweiten Beschlagteil 12 gelagert und stützt sich am ersten Beschlagteil 11 ab.

Um das dynamische Betriebsverhalten, insbesondere das Ablaufverhalten des Verstellbeschlages zu verbessern, schlägt die DE 20 2009 007 513 U1 in Absatz [0035] vor, einen Sperrring vorzusehen, der in der Druckschrift DE 195 48 809 C1 offenbart ist.

In der Druckschrift DE 195 48 809 C1 ist eine Ver- und Feststelleinrichtung beschrieben, die bis auf einige Unterschiede nahezu baugleich ausgebildet ist. Die Ver- und Feststelleinrichtung für einen Fahrzeugsitz umfasst ein erstes Beschlagteil und ein hierzu mittels eines Getriebes um eine Drehachse drehverstellbar vorgesehenes zweites Beschlagteil, wobei das Getriebe eine erste Verzahnung am ersten Beschlagteil umfasst und das Getriebe eine exzentrisch zur ersten Verzahnung angeordnete zweite Verzahnung am zweiten Beschlagteil aufweist, wobei ferner wiederum zwei Keilsegmente zur Sicherstellung der exzentrischen Anordnung der ersten Verzahnung relativ zur zweiten Verzahnung vorgesehen sind. Die Besonderheit der Ver- und Feststellvorrichtung der Druckschrift DE 195 48 809 C1 besteht darin, dass zur Verhinderung des Ablaufens des mit der Rückenlehne verbundenen zweiten Beschlagteils, während eines durch Rütteln und Stoßen gekennzeichneten Zeitraums unter dynamischen Betriebsbedingungen ein Sperrring in der radialen Ebene zwischen den Keilsegmenten und einem Mitnehmer einer Drehverstellvorrichtung angeordnet ist, wobei der Sperrring an einem Außenumfang wenigstens eine, in eine leere Gegenverzahnung des festen Beschlagteils eingreifbare, Sperrnase aufweist. Dabei wird der Sperrring von einem Federglied gehalten. Die Sperrnase ist durch Anschläge des Mitnehmers bei dessen Drehbewegung aus der leeren Gegenverzahnung ansteuerbar. Dadurch entsteht an den Keilsegmenten eine durch Formschluss gebildete Sperrlage, wodurch die Beschlagteile bei einem Rütteln und Stoßen am Kraftfahrzeugsitz während des Fahrbetriebes und in einem Crashfall am Ablaufen durch auf die Ver- und Feststelleinrichtung wirkenden Kraftstöße beim dynamischen Betrieb des Fahrzeuges gehindert werden. Dadurch wird das crashfallbedingte und das durch ein Rütteln und Stoßen hervorgerufene Ablaufen der Rückenlehne durch die gebildete Sperrlage verhindert. Hieran ist nachteilig, dass ein dauerhafter Eingriff der Sperrnase in die Gegenverzahnung des festen Beschlagteils vorhanden ist, der einerseits eine ungewollte Geräuschentwicklung und andererseits einen zusätzlichen Kraftaufwand zur Verstellung des Verstellbeschlages bewirkt.

Weitere Lösungen zur Ablaufsicherung von Verstellbeschlägen gehen aus der Druckschrift DE 10 2008 010 078 B4 und der Druckschrift EP 2 015 958 B1 hervor.

Die Druckschrift DE 10 2008 010 078 B4 lehrt einen gewährbaren Verstellbeschlag, der ein erstes Beschlagteil und einen hierzu mittels eines Getriebes um eine Drehachse drehverstellbar vorgesehenes zweites Beschlagteil aufweist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind, wobei die Keilsegmente radial außenseitig in einer eine Buchsenverzahnung aufweisenden Gleitbuchse gelagert sind, wobei der Verstellbeschlag ein Bremselement aufweist, wobei das Bremselement in einer Freigabestellung innerhalb des Radius der Gleitbuchse angeordnet ist und wobei das Bremselement in einer Blockierstellung in die Buchsenverzahnung eingreift. Das Bremselement sichert den Verstellbeschlag in seiner Blockierstellung gegen ungewolltes Ablaufen der ersten gegenüber der zweiten Verzahnung. Die Druckschrift weist darauf hin, dass die Buchsenverzahnung als eine von der Gleitbuchse separate Verzahnung vorgesehen sein kann.

Die Druckschrift EP 2 015 958 B1 offenbart eine von der Druckschrift DE 10 2008 010 078 B4 abweichende Lösung, die jedoch ebenfalls ein Bremselement aufweist. Das Bremselement weist in radialer Richtung ausgehend von der Drehachse des Verstellbeschlages eine Ausdehnung auf, die dem Außenradius der Keilsegmente entspricht. Das Bremselement ist in eine Blockierstellung und eine Freigabestellung einstellbar, wobei das Bremselement ein erstes Blockierelement umfasst, wobei in die Blockierstellung das erste Blockierelement in ein zweites Blockierelement des ersten Beschlagteiles radial zur Drehachse eingreifend vorgesehen ist, wobei das zweite Blockierelement in radialer Richtung ausgehend von der Drehachse eine kleinere Ausdehnung als die zweite Verzahnung und als die erste Verzahnung aufweist.

Der Erfindung liegt nun die Aufgabe zugrunde, eine alternative Ausgestaltung eines Verstellbeschlages zu schaffen, der eine Verstellung des Verstellbeschlages mit einem geringem Kraftaufwand erfüllt, wobei eine Ablaufsicherung ausgebildet sein soll, welche in einem Verriegelungszustand (Blockierstellung) des Verstellbeschlages ein hohes Bremsmoment entfaltet und der zudem geräuschlos arbeitet.

Ausgangspunkt ist ein Beschlag wie er bereits im Zusammenhang mit Figur 1 beschrieben worden ist. Ein solcher Beschlag in seiner allgemeinsten Ausführung umfasst, ein erstes, scheibenförmiges Beschlagteil, an welchem ein Hohlzahnkranz ausgebildet ist, und ein relativ zum ersten Beschlagteil um eine axiale Längsachse des Beschlages verdrehbares zweites scheibenförmiges Beschlagteil, an welchem ein Stirnzahnrad ausgebildet ist, welches sich an dem Hohlzahnkranz abwälzt, wodurch die beiden Beschlagteile miteinander mittels Keilsegmenten zur Sicherstellung einer exzentrischen Anordnung des Hohlzahnkranzes relativ zum Stirnzahnrad in Getriebeverbindung stehen, und einen auf die Keilsegmente einwirkenden drehbar gelagerten von einem Exzenterantriebsmittel angetriebenen Mitnehmer zum Antrieb einer exzentrischen Abwälzbewegung von Stirnzahnrad und Hohlzahnkranz.

In Verbindung mit diesen Merkmalen des Oberbegriffs des Patentanspruchs 1, wird die Aufgabe dadurch gelöst, dass ausgehend von der Längsachse in radialer Richtung des Beschlages zwischen einem Innenradius des zweiten Beschlagteiles und einem Außenradius der Keilsegmente ein Distanzelement angeordnet ist, welches zumindest in axialer Richtung offene Aussparungen aufweist, wobei in mindestens eine Aussparung in einem ein Ablaufen des Beschlages sichernden Verriegelungszustand mindestens ein radial über den Außenradius der Keilsegmente hinausgeführter Sperrriegel eines Sperrelementes eingreift, der an einem in das Sperrelement integrierten flexiblen Bereich angeordnet ist, wodurch der mindestens eine Sperrriegel mittels am Mitnehmer angeordneten Mitnehmersperrnasen unter Verformung des sich als Rückstellkraftspeicher bildenden flexiblen Bereiches des Sperrelementes unter Bewirkung eines Entriegelungszustandes des Beschlages in axialer Richtung aus der mindestens einen Aussparung des Distanzelementes ausrückt.

In bevorzugter Ausgestaltung der Erfindung, ist dass das Distanzelement in den zweiten Kragenzug des zweiten Beschlagteiles eingepresst. Durch das Einpressen wird in vorteilhafter Weise eine schnelle und sichere drehfeste Anordnung des Distanzelementes in dem zweiten Beschlagteil erreicht.

In weiterer bevorzugter Ausgestaltung der Erfindung, liegt das mindestens eine Sperrelement im Verriegelungszustand in einer benachbarten radialen Ebene zu den Keilsegmenten. Das Sperrelement erstreckt sich zwischen einem Innenradius der Keilsegmente und einem Außenradius des Distanzelementes. Der Innenradius des Sperrelementes stimmt mit dem Innenradius der Keilsegmente überein. Dabei weist das Sperrelement in seiner größten durch den Sperrriegel gebildeten radialen Ausdehnung einen Außenradius auf, der nahezu dem Außenradius des Distanzelementes entspricht.

Ein starrer und der flexible Bereich des Sperrelementes mit seinem Sperrriegel ist im Verriegelungszustand vollständig in der radialen Ebene und im Entriegelungszustand unvollständig in der radialen Ebene des Distanzelementes angeordnet, da der flexible Bereich des Sperrelementes mit seinem Sperrriegel im Entriegelungszustand aus der radialen Ebene des Distanzelementes in axialer Richtung heraus rückt.

Das Ausrücken des flexiblen Bereiches des Sperrriegels in axialer Richtung erfolgt bei dem erfindungsgemäßen Beschlag in einer gegenüber dem Stand der Technik alternativen Art und Weise, indem der flexible Bereich des Sperrelementes mit dem daran angeordneten mindestens einen Sperrriegel gegenüber dem starren Bereich um einen Schwenkwinkel aus dem Verriegelungszustand in axialer Richtung reversibel in den Entriegelungszustand bewegt wird.

Bevorzugt ist vorgesehen, dass der mindestens eine Sperrriegel des Sperrelementes eine U-Kontur aufweist, die in axialer Richtung des Beschlages auskragt, wobei die U-Kontur in radialer Richtung des Beschlages in Richtung der Schwenkachse offen ist. Die U-Kontur stellt, wie noch erläutert wird, in vorteilhafter Weise eine besonders sichere Aufnahme für die Mitnehmersperrnasen dar.

Die Mitnehmersperrnasen sind in bevorzugter Ausgestaltung der Erfindung in horizontaler Richtung quer zur axialen Längsrichtung des Beschlages ausgerichtet und greifen im Entriegelungszustand über eine Rampe in die U-Kontur des Sperrriegels des Sperrelementes ein.

Dadurch wird der Sperrriegel im Entriegelungszustand mittels der Rampe in axialer Richtung aus mindestens einer Aussparung des Distanzelementes heraus gedrückt.

In einer bevorzugten mit einer zweiten Gleitlagerbuchse versehenen Ausgestaltung eines Beschlages, wie sie regelmäßig vorgesehen wird, stimmt das Distanzelement mit seinem Innenradius mit dem Außenradius einer zweiten Gleitlagebuchse überein. Das Distanzelement steht gegenüber der zweiten Gleitlagerbuchse in axialer Richtung hervor und bildet gegenüber der zweiten Gleitlagerbuchse einen umlaufenden Rand, so dass das Sperrelement in das Distanzelement eingreifen kann.

In weiterer bevorzugter Ausgestaltung, bildet der Mitnehmer in Anlagebereichen Anlageflächen aus, denen im starren Bereich des Sperrelementes Anlageflächen in Anlagebereichen axial gegenüberliegen, wodurch der starre Bereich des Sperrelementes gegenüber dem flexiblen Bereich des Sperrelementes axial gesichert ist.

Die Erfindung schlägt verschiedene Ausführungsformen von Sperrelementen vor.

Bevorzugt ist, dass das Sperrelement im flexiblen Bereich des Sperrelementes einen oder mehrere mit im Wesentlichen der Form der Aussparungen korrespondierende Sperrriegel aufweist. In einer Ausführungsform sind dabei zwei Sperrriegel zu einer U-Kontur zusammengeführt und sind gleichzeitig dafür ausgebildet im Verriegelungszustand in zwei Aussparungen des Distanzelementes einzugreifen.

Weitere bevorzugte Ausgestaltungen der Erfindung ergeben sich aus den übrigen, in den Unteransprüchen genannten Merkmalen.

Die Erfindung wird nachfolgend anhand eines Ausführungsbeispieles mit Hilfe der zugehörigen Zeichnungen erläutert. Es zeigen:
- Figur 1: einen Lehneneinstellbeschlag nach dem Stand der Technik;
- Figur 2: den erfindungsgemäßen Lehneneinstellbeschlag in einer Explosionsdarstellung;
- Figur 3A: eine vergrößerte perspektivische Ansicht des Aufbaus des Lehneneinstellbeschlages nach Figur 2 zwischen einem ersten und einem zweiten Kragenzug der Beschlagteile des Lehneneinstellbeschlages;
- Figur 3B: eine vergrößerte perspektivische Darstellung eines Sperrelementes (erste Ausführungsform) in seinem Verriegelungszustand zur Ablaufsicherung des Lehneneinstellbeschlages;
- Figur 3C: eine vergrößerte perspektivische Darstellung des Sperrelementes (erste Ausführungsform) in seinem Entriegelungszustand;
- Figur 3D: ein Schnitt durch das Sperrelement nach Figur 3C;
- Figur 4A: eine vergrößerte Ansicht des Lehneneinstellbeschlages in seinem Verriegelungszustand gemäß Figur 3A mit Federelement;
- Figur 4B: eine vergrößerte Draufsicht des Lehneneinstellbeschlages in seinem Verriegelungszustand gemäß Figur 3A nur mit angedeutetem Federelement;
- Figur 5A, 5B: eine perspektivische Ansicht (Figur 5A) und eine Draufsicht (Figur 5B) auf den Ver- und Entriegelungsbereich des Lehneneinstellbeschlages in seinem Verriegelungszustand;
- Figur 6A, 6B: eine perspektivische Ansicht (Figur 6A) und eine Draufsicht (Figur 6B) auf den Ver- und Entriegelungsbereich des Lehneneinstellbeschlages in seinem Entriegelungszustand;
- Figur 6C: eine vergrößerte Schnittdarstellung im Bereich des Sperrelementes in einer in Längsrichtung des Lehneneinstellbeschlages liegenden Schnittebene mit Darstellung des Sperrelementes in seinem Ver- und Entriegelungszustand;
- Figur 7A, 7B: vergrößerte perspektivische Darstellungen eines weiteren Sperrelementes (zweites Ausführungsform) jeweils in seinem Verriegelungszustand und
- Figur 8A, 8B: vergrößerte perspektivische Darstellungen eines weiteren Sperrelementes (dritte Ausführungsform) jeweils in seinem Verriegelungszustand.

Ausgehend von dem in Figur 1 gezeigten Beschlag, in der Ausgestaltung als Lehneneinstellbeschlag 10 wird der erfindungsgemäße Lehneneinstellbeschlag 10 anhand der oben genannten Figuren erläutert. Auf die bereits aus dem Stand der Technik bekannten Bauteile des erfindungsgemäßen Lehneneinstellbeschlages 10 wird noch einmal eingegangen, insofern sie für die Beschreibung des neuen Lehneneinstellbeschlages 10 von Bedeutung sind. Die Bezugszeichen der aus dem Stand der Technik bekannten Bauteile werden bei der Beschreibung der Erfindung weiter verwendet.

Die Figur 2 zeigt den erfindungsgemäßen Lehneneinstellbeschlag 10 in einer Explosionsdarstellung. Durch die Explosionsdarstellung wird verdeutlicht, dass der Lehneneinstellbeschlag 10 als eines der für die Erfindung wesentlichen Bauteile, ein Distanzelement 23 aufweist. Das Distanzelement 23 ist im zweiten Beschlagteil 12 in dem zweiten Kragenzug 25 eingepresst und dadurch fest mit dem zweiten Beschlagteil 12 verbunden.

Der Aufbau und die technische Funktion des Distanzelementes 23 wird im Folgenden noch näher erläutert. Die Außenumfangsmantelfläche des Distanzelementes 23 grenzt im zusammengebauten Zustand des Lehneneinstellbeschlages 10 an die Innenfläche des zweiten Kragenzuges 25 des als Stirnzahnrad 15 ausgebildeten zweiten Beschlagteiles 12 an, welches im Ausführungsbeispiel über die zweite Adapterplatte 12A fest mit einem Sitzteil verbunden ist.

In einer möglichen Ausgestaltung stützt sich die Innenumfangsmantelfläche des Distanzelementes 23 auf der Außenumfangsmantelfläche der Keilsegmente 24 ab, die ihrerseits auf dem ersten Kragenzug 19 des als Hohlzahnkranz 17 ausgebildeten ersten Beschlagteiles 11 abgestützt sind, welches im Ausführungsbeispiel über die erste Adapterplatte 11A schwenkbar mit einer Rückenlehne verbunden ist.

Jedoch ist regelmäßig, wie bereits erläutert wurde, eine Gleitlagerbuchse 28, die als zweite Gleitlagerbuchse bezeichnet wird, angeordnet. Um die Leichtgängigkeit des Lehneneinstellbeschlages 10 zu gewährleisten, liegt die zweite Gleitlagerbuchse 28 innerhalb der axialen Öffnung des zweiten Beschlagteiles 12.

Dadurch liegt das Distanzelement 23 von Innen nach Außen in radialer Richtung gesehen zwischen der Gleitlagerbuchse 28 und dem zweiten Kragenzug 25 des Stirnzahnrades 15.

In dieser Ausgestaltung ergeben sich somit andere Verhältnisse. In der Ausgestaltung mit der zweiten Gleitlagerbuchse 28 stützt sich die Innenumfangsmantelfläche des Distanzelementes 23 auf der Außenumfangsmantelfläche der zweiten Gleitlagerbuchse 28 ab, die sich ihrerseits auf den Keilsegmenten 24 abstützt, die sich wiederum auf dem ersten Kragenzug 19 des als Hohlzahnkranz 17 ausgebildeten ersten Beschlagteiles 11 abstützen, welches im Ausführungsbeispiel über die erste Adapterplatte 11A schwenkbar mit der Rückenlehne verbunden ist.

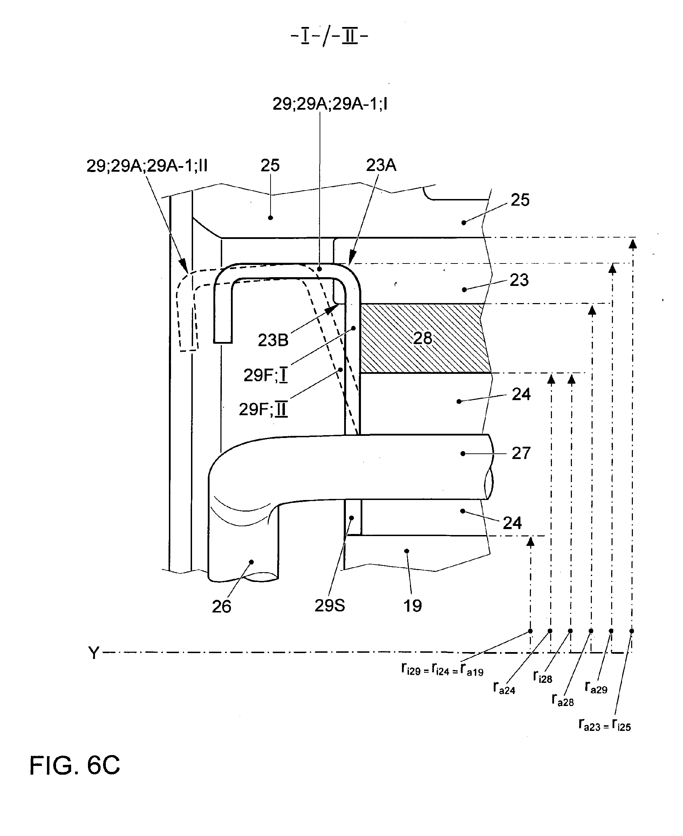

Der Lehneneinstellbeschlag 10 weist ferner zusätzlich ein weiteres für die Erfindung wesentliches Sperrelement 29 auf. Das Sperrelement 29 ist halbkreisförmig, wobei sich ein Außenradius rₐ₂₉ des Sperrelementes 29 unter Berücksichtigung eines sich über den Halbkreis in radialer Richtung erstreckenden Sperrriegels 29A maximal bis zu dem Außenradius rₐ₂₃ des Distanzelementes 23 erstreckt. Im Ausführungsbeispiel ist der Außenradius rₐ₂₉ des Sperrelementes 29 etwas kleiner als der Außenradius rₐ₂₃ des Distanzelementes 23. (rₐ₂₃ < rₐ₂₉) Der Innenradius des Sperrelementes 29 rᵢ₂₉ stimmt im Wesentlichen mit dem Innenradius der Keilsegmente 24 überein. (siehe parallel zu Figur 2 die Figur 6C)

Das Sperrelement 29 weist in einer ersten Ausführungsform einen einzigen Sperrriegel 29A auf, der in radialer Richtung von der halbkreisförmigen Fläche des Sperrelementes 29 absteht, mit anderen Worten der Sperrriegel 29A überragt die halbkreisförmige Fläche des Sperrelementes in radialer Richtung.

Der in Figur 2 dargestellte Mitnehmer 20 ist an sich bekannt, jedoch weist er erfindungsgemäß als weitere wesentliche Veränderung gegenüber dem Stand der Technik an einem radial abstehenden Abschnitt des Mitnehmers 20 sich gegenüber liegende Mitnehmersperrnasen 20B auf. Diese sich gegenüber liegenden Mitnehmersperrnasen 20B sind in horizontaler Richtung quer zur axialen Längsrichtung des Lehneneinstellbeschlages 10 ausgerichtet.

Die weiteren in Figur 2 dargestellten Bauteile wurden bereits im Zusammenhang mit der Beschreibung der Figur 1 erläutert.

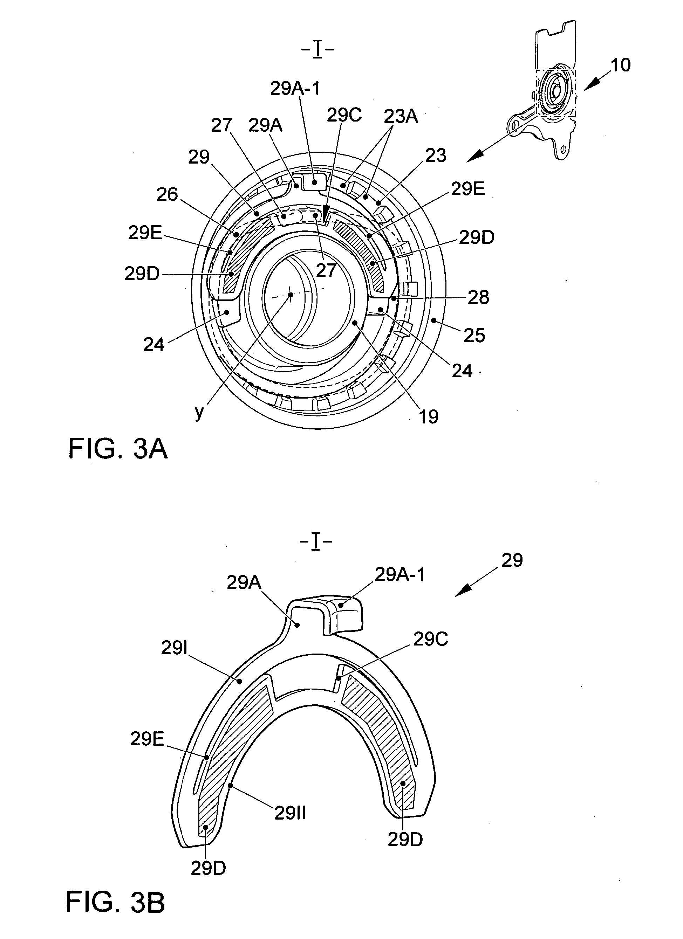

Die Figur 3A zeigt eine vergrößerte perspektivische Ansicht des Aufbaus des Lehneneinstellbeschlages 10 nach Figur 2 zwischen dem ersten und dem zweiten Kragenzug 19, 25 der Beschlagteile 11, 12 des Lehneneinstellbeschlages 10 im Verriegelungszustand I.

Die perspektivische Ansicht zeigt das Sperrelement 29, welches in einer quer zur axialen Längsachse liegenden Ebene vor den in einer dahinterliegenden Ebene liegenden Keilsegmenten 24 angeordnet ist. Die Keilsegmente 24 liegen im Wesentlichen in der gleichen radialen Ebene wie die zweite Gleitlagerbuchse 28, da sich die zweite Gleitlagerbuchse 28 radial auf den Keilsegmenten 24 abstützt (siehe auch Figur 6C).

Die Aussparungen 23A des Distanzelementes 23 liegen in einem axial abstehenden Rand 23B des Distanzelementes in der Ebene des radial ausgerichteten Sperrelementes 29. Das Distanzelement 23 stützt sich im Ausführungsbeispiel außerhalb der Aussparungen 23A in radialer Richtung auf der zweiten Gleitlagerbuchse 28 auf. Wird die zweite Gleitlagerbuchse 28 nicht ausgeführt, stützt sich das Distanzelement 23 entsprechend direkt - nicht indirekt über die Gleitlagerbuchse 28 - auf den Keilsegmenten 24 ab, wobei die Aussparungen 23A in axialer Richtung über die Keilsegmente 24 überstehen, damit das Sperrelement 29, wie bereits erläutert, in radialer Richtung in die Aussparungen 23A des Distanzelementes 23 eingreifen kann.

In der Figur 3A ist der Mitnehmer 20, die Gleitlagerbuchse 13 sowie die Nabe 21 mit der Abdeckscheibe 30 und die zugehörige Dichtung 22 nicht dargestellt. Das Federelement 26 und die Federschenkel 27 sind nur andeutungsweise (gestrichelte Linienführung) dargestellt. Dadurch wird die zu dem Mitnehmer 20 gerichtete Fläche, die hier als Vorderseite des Sperrelementes 23 definiert wird, sichtbar.

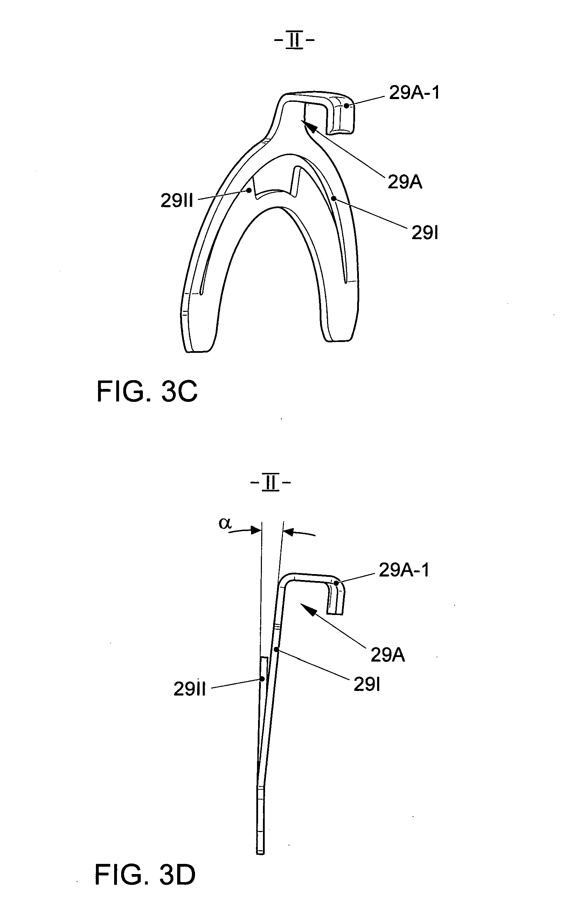

Das Sperrelement 29 weist einen Ausschnitt 29C auf (Figur 3C), durch welchen die Federschenkel 27 der Ringfeder 26 in axialer Richtung hindurchgeführt werden, so dass die Federschenkel 27 in dafür in den Keilsegmenten 24 vorgesehene Aufnahmen eingreifen können.

Der bereits erwähnte Sperrriegel 29A steht in radialer Richtung von dem Sperrelement 29 ab und greift in einem Verriegelungszustand I des Lehneneinstellbeschlages 10 in das Distanzelement 23 ein. Der Eingriff des Sperrriegels 29A erfolgt in mindestens einer dafür im Distanzelement 23 vorgehaltenen Aussparungen 23A, die als in radialer Richtung ausgebildete Vertiefungen ausgebildet sind, deren Breite mindestens der Breite des Sperrriegels 29A entspricht.

Das Distanzelement 23 ist ein Distanzring, der durch die auf dem gesamten Umfang in axialer Richtung einseitig ausgebildeten Vertiefungen (Aussparungen 23A) als Distanzkrone bezeichnet wird. Das Sperrelement 29 weist in den Anlagebereichen 29D Anlageflächen auf, deren Bedeutung nachfolgend noch näher erläutert wird.

Zur weiteren Verdeutlichung der Ausgestaltung des Sperrelementes 29 in einer ersten Ausführungsform dient Figur 3B, 3C und 3D.

Figur 3B zeigt eine vergrößerte perspektivische Darstellung des Sperrelementes 29 in der ersten Ausführungsform in seinem Verriegelungszustand I, in dem der Lehneneinstellbeschlag 10 gegen Ablaufen gesichert ist. Das Sperrelement 29 weist in der ersten Ausführungsform nur einen einzigen Sperrriegel 29A auf.

Durch die vergrößerte Darstellung wird besser sichtbar, dass das Sperrelement 29 eine halbkreisförmige Nut 29E aufweist, die das Sperrelement 29 ausgehend von dem Ausschnitt 29C in zwei halbkreisförmige Bereiche 29F, 29S teilt, die jedoch jeweils endseitig miteinander verbunden sind. Der untere halbkreisförmige Bereich wird als starrer Bereich 29S und der obere halbkreisförmige Bereich wird als flexibler Bereich 29F bezeichnet, worauf später noch detailliert eingegangen wird. In dem starren Bereich 29S liegen die Anlageflächen der Anlagebereiche 29D des Sperrelementes 29.

An dem flexiblen Bereich 29F ist der Sperrriegel 29A angeordnet, der eine U-Kontur 29A-1 aufweist. Die U-Kontur 29A-1 kragt in axialer Richtung des Lehneneinstellbeschlages 10 aus und ist endseitig in radialer Richtung des Lehneneinstellbeschlages 10 wieder in radialer Richtung zur Längsachse Y des Lehneneinstellbeschlages 10 hin umgebogen, so dass ein zur Längsachse Y des Lehneneinstellbeschlages 10 gerichtetes offenes >U< ausgebildet ist.

Die Figur 3C zeigt eine vergrößerte perspektivische Darstellung des Sperrelementes 29 ebenfalls in der ersten Ausführungsform in seinem Entriegelungszustand II. Im Entriegelungszustand II, der während der Verstellung des Lehneneinstellbeschlages 10 vorliegt, ist der flexible Bereich 29F gegenüber dem starren Bereich 29S in axialer Richtung verlagert. Der starre Bereich 29S und der flexible Bereich 29F liegen somit im Entriegelungszustand II nicht mehr in einer Ebene.

Wie Figur 3D in einem Schnitt durch das Sperrelement 29 zeigt, ist der flexible Bereich 29F gegenüber dem starren Bereich 29S um einen Sperrelement-Schwenkwinkel α verlagerbar.

Diese Verlagerung des flexiblen Bereiches 29F des Sperrelementes 29 findet jedoch nur dann statt, wenn der Lehneneinstellbeschlag 10 betätigt wird. Wird der Lehneneinstellbeschlag 10 nicht betätigt, bleibt der Sperrriegel 29A innerhalb einer der Aussparungen 23A der Distanzkrone 23 und sichert den Lehneneinstellbeschlag 10 vor dem ungewollten Ablaufen.

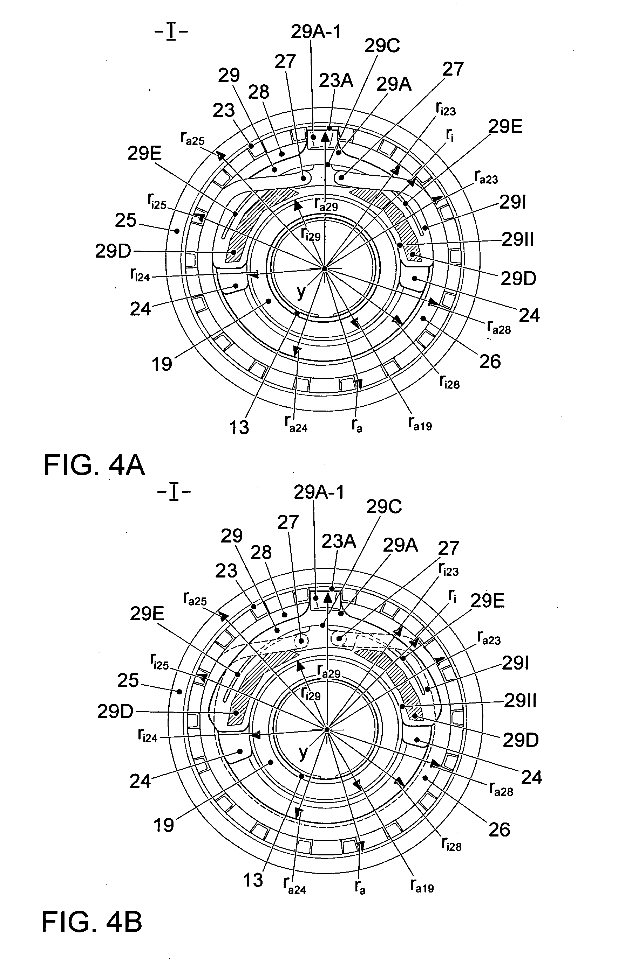

In den Figuren 4A und 4B wird in vergrößerten Draufsichten der Lehneneinstellbeschlag 10 jeweilig im Verriegelungszustand II des Lehneneinstellbeschlages 10 verdeutlicht. Figur 4A unterscheidet sich von Figur 4B darin, dass dort das Federelement, in der Art der Ringfeder 26 nur noch einer gestrichelte Linienführung dargestellt wird, um eine bessere Sicht auf das Sperrelement 29 zu gewährleisten.

Zunächst ist in den Figuren 4A und 4B erkennbar, dass die Lage der Bauteile hinsichtlich der Raumforderungen innerhalb des Lehneneinstellbeschlages 10 zueinander optimiert worden ist, wobei die Anordnung teilweise auch technisch bedingt ist. Die nachfolgenden Ausführungen sind ebenfalls in Figur 6C nachvollziehbar. Die Beschreibung erfolgt unter Berücksichtigung der Ausgestaltung des Lehneneinstellbeschlags 10 mit einer Gleitlagerbuchse 28.

Ausgangspunkt ist ein Außenradius rₐ₁₉ des ersten Kragenzuges 19. Dieser Außenradius rₐ₁₉ des ersten Kragenzuges 19 entspricht einem Innenradius rᵢ₂₄ der Keilsegmente 24. An einen Außenradius rₐ₂₄ der Keilsegmente 24 schließt sich die zweite Gleitlagerbuchse 28 mit ihrem Innenradius rᵢ₂₈ an. Ein Außenradius rₐ₂₈ der zweiten Gleitlagerbuchse 28 stimmt mit dem Innenradius rₐ₂₃ der Distanzkrone 23 überein. In axialer Richtung (siehe Figur 6C) bildet die Distanzkrone 23 gegenüber der zweiten Gleitlagerbuchse 28 den umlaufenden in axialer Richtung überstehenden Rand 23B.

Der zweite Kragenzug 25 weist den Außenradius rₐ₂₅ auf. Die zweite Gleitlagerbuchse 28 weist einen Außenradius rₐ₂₈ auf, der dem Innenradius rᵢ₂₈ einer zentralen Öffnung der Distanzkrone 23 entspricht. Bis nahe zu dem Außenradius rₐ₂₃ der Distanzkrone 23 verläuft der Sperrriegel 29A des Sperrelementes 29, der einen Außenradius rₐ₂₉ aufweist. Der Innenradius rᵢ₂₉ des Sperrelementes 29 entspricht im Wesentlichen dem Innenradius rᵢ₂₄ der Keilsegmente 24. Das Sperrelement 29 mit dem Sperrriegel 29A erstreckt sich zwischen dem Außenradius rₐ₁₉ des ersten Kragenzuges 19 nahe bis zu dem Außenradius rₐ₂₃ der Distanzkrone 23. Der Sperrriegel 29A des Sperrelementes 29 wird in axialer Richtung verlagert, um von dem Verriegelungszustand I (29, 29A, 29A-1; I) in den Entriegelungszustand II (29, 29A, 29A-1; II) zu gelangen.

Hierdurch unterscheidet sich der Lehneneinstellbeschlag 10 unter anderem wesentlich von der Druckschrift DE 10 2007 010 078 B4. Dort ist das Bremselement, welches dem Sperrelement 29 entspricht in der Freigabestellung, bei der der Verstellbeschlag freigegeben wird, innerhalb des Radius der Gleitlagerbuchse angeordnet. Im Übrigen dehnt sich auch das in der Druckschrift EP 2 015 958 B1 beschriebene Bremselement nur bis zum Außenradius der Keilsegmente aus. Hinzu kommt, dass das erfindungsgemäße Sperrelement 29 den flexiblen 29F und den starren Bereich 29S aufweist, das heißt die Federwirkung zur Rückverstellung des Sperrelementes 29 in die Verriegelungsstellung I wird durch ein in das Sperrelement 29 selbst integriertes Bauteil, nämlich durch den axial beweglichen flexiblen Bereich 29F bewerkstelligt, der an dem der Sperrriegel 29A angeordnet ist. Es wird anders als in der Druckschrift DE 195 48 809 C1 beschrieben ein Distanzelement 23 angeordnet, in welches das Sperrelement 29 eingreift. Bei der Druckschrift DE 195 48 809 C1 greift im Unterschied zu der erfindungsgemäßen Lösung eine Sperrnase des Sperrringes direkt in die Gegenverzahnung eines ersten Beschlagteiles ein.

Insgesamt wird ein wesentlicher Unterschied des Lehneneinstellbeschlages 10 gegenüber den bekannten Beschlägen darin gesehen, dass der Lehneneinstellbeschlag 10 in seinem Verriegelungszustand mindestens ein radial über den Außenradius rₐ₂₄ der Keilsegmente 24 beziehungsweise bei Ausgestaltung mit einer zweiten Gleitlagerbuchse 28 über den Außenradius rₐ₂₄ der Keilsegmente 24 und den Außenradius rₐ₂₈ der Gleitlagerbuchse 28 hinaus geführtes Sperrelement 29 mit einem Sperrriegel 29A aufweist, der an einem in das Sperrelement 29 integrierten flexiblen Bereich 29F des Sperrelementes 29 angeordnet ist. Zur Bewirkung des Entriegelungszustandes II des Lehneneinstellbeschlages 10 ist der Sperrriegel 29A aus den Aussparungen 23A des Distanzelementes 23 in axialer Richtung ausrückbar. Der Eingriff des Sperrriegels 29A am flexiblen Bereich 29F des Sperrelementes 29 in das Distanzelement 23 erfolgt aus radialer Richtung. Die Verstellbewegung des flexiblen Bereichs 29F des Sperrelementes 29 und damit des Sperrriegels 29A zur Bewirkung des Entriegelungszustandes II erfolgt in axialer Richtung.

Die beispielhaft genannten Unterschiede zum Stand der Technik und weitere Unterschiede, die in der Beschreibung verdeutlicht werden, ergeben sich durch die Anordnung und durch die sich vom Stand der Technik unterscheidende geometrische Ausbildung des Sperrelementes 29 des erfindungsgemäßen Lehneneinstellbeschlages 10.

Durch die Figuren wird ferner deutlich, dass die als Kraftspeicher fungierende Ringfeder 26 mit ihren Federschenkeln 27 durch den im starren Bereich 29S des Sperrelementes 19 liegenden Ausschnitt 29C des Sperrelementes 29 hindurch in die Aufnahmen der Keilsegmente 24 eingreift und dabei die Keilsegmente 24 auseinander drückt.

Figur 4A zeigt die Position der Keilsegmente 24 und der Federschenkel 27 der Ringfeder 26 in Ursprungslage. Solange das Sperrelement 29 in der Distanzkrone 23 festgelegt ist, kommen die Federschenkel 27 der Ringfeder 26 an den seitlichen Flanken des Ausschnittes 29C zunächst noch nicht zur Anlage. Durch Rütteln und auftretende Erschütterungen, die auf den Lehneneinstellbeschlag 10, infolge von fahrzeugsitzseitig auf den Lehneneinstellbeschlag 10 übertragene Fahrfrequenzen, wandern die Keilsegmente 24 - in die eine oder in die andere Richtung -, wobei eine Drehbewegung der Keilsegmente 24 aus der Ursprungslage nur bis zu einer in Figur 4B gezeigten Sperrlage zugelassen wird.

In Figur 4B sind die Keilsegmente 24 beispielsweise nach links gewandert, wonach der linke Federschenkel 27 der Ringfeder 26 an der linken Flanke des Ausschnittes 29C ein weiteres wandern der Keilsegmente 24 verhindert. Durch das Sperrelement 29 wird somit das ungewollte Ablaufen der Beschlagteile 11, 12 relativ zueinander zuverlässig verhindert.

Zur Verstellung des Lehneneinstellbeschlages 10 muss das Sperrelement 29 somit entriegelt werden, so dass der Lehneneinstellbeschlag 10 in einen Entriegelungszustand I übergeht. Die beschriebene zugelassene minimale Verstellbewegung der Keilsegmente 24 aus der Ursprungslage in die Sperrlage, dient bei der Entriegelung des Lehneneinstellbeschlages 10 dazu, dass die durch das Mitnehmersegment 20A des Mitnehmers 20 bewirkte Entriegelung stattfinden kann, wie nachfolgend erläutert wird.

Für die Verriegelung weist das Sperrelement 29 den bereits beschriebenen Sperrriegel 29A mit der U-Kontur 29A-1 auf. Um den Entriegelungszustand I bewerkstelligen zu können, weist der Mitnehmer 20 neben dem Mitnehmersegment 20A zur Mitnahme der Keilsegmente 24 zwei Mitnehmersperrnasen 20B auf.

Durch die bisherige Beschreibung wird bereits deutlich, dass sich der erfindungsgemäße Lehneneinstellbeschlag 10 von dem bekannten Lehneneinstellbeschlag durch das Distanzelement 23, das Sperrelement 29 und einen modifizierten Mitnehmer 20 unterscheidet. Das Distanzelement 23, das Sperrelement 29 sowie der modifizierte Mitnehmer 20 stellen gemeinsam ein so genanntes in den Lehneneinstellbeschlag 10 integriertes Axialsperrsystem dar.

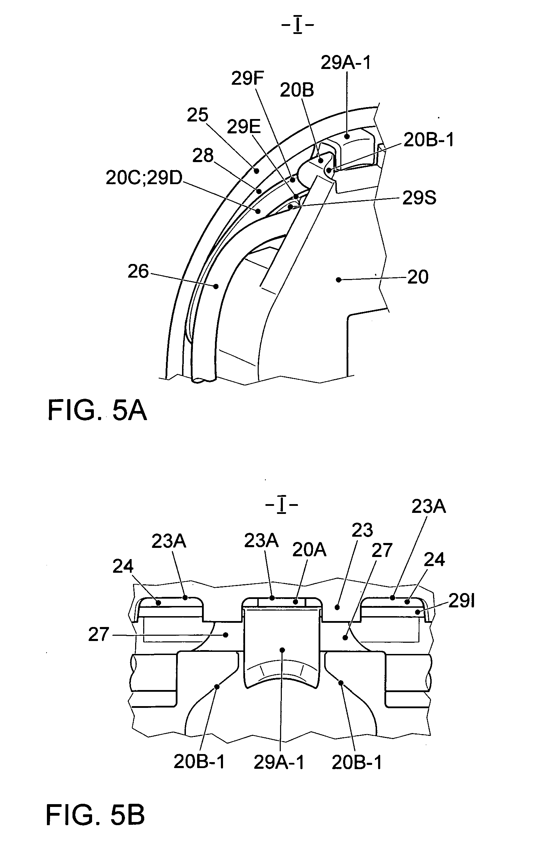

Nachfolgend wird die Funktion und Vorgehensweise der Entriegelung des Lehneneinstellbeschlages 10 mit Hilfe des Axialsperrsystems beschrieben. Zur Erläuterung der Funktionsweise und der Vorgehensweise zeigen die Figuren 5A und 5B eine perspektivische Ansicht (Figur 5A) und eine Draufsicht (Figur 5B) auf den Ver- und Entriegelungsbereich des Lehneneinstellbeschlages 10 noch in seinem Verriegelungszustand I.

In Figur 5A ist die Distanzkrone 23 durch den von oben schräg auf den Ausschnitt des Lehneneinstellbeschlages 10 gerichteten Blick nicht sichtbar, da die Distanzkrone 23 in dem durch den zweiten Kragenzug 25 gebildeten Kragen des zweiten Beschlagteiles 12 sitzt.

In dem ohne den zweiten Kragenzug 25 gezeigten Ausschnitt der Draufsicht gemäß Figur 5B wird sichtbar, dass der Sperrriegel 29A-1 im Verriegelungszustand II in einer der Aussparungen 23A der Distanzkrone 23 sitzt.

Damit der Sperrriegel 29A-1 aus der Aussparung 23A der Distanzkrone 23 heraus bewegbar ist, werden die an dem Mitnehmer 20 horizontal quer zur Längsachse Y des Lehneneinstellbeschlages 10 gegenüber liegend angeordneten Mitnehmersperrnasen 20B verwendet.

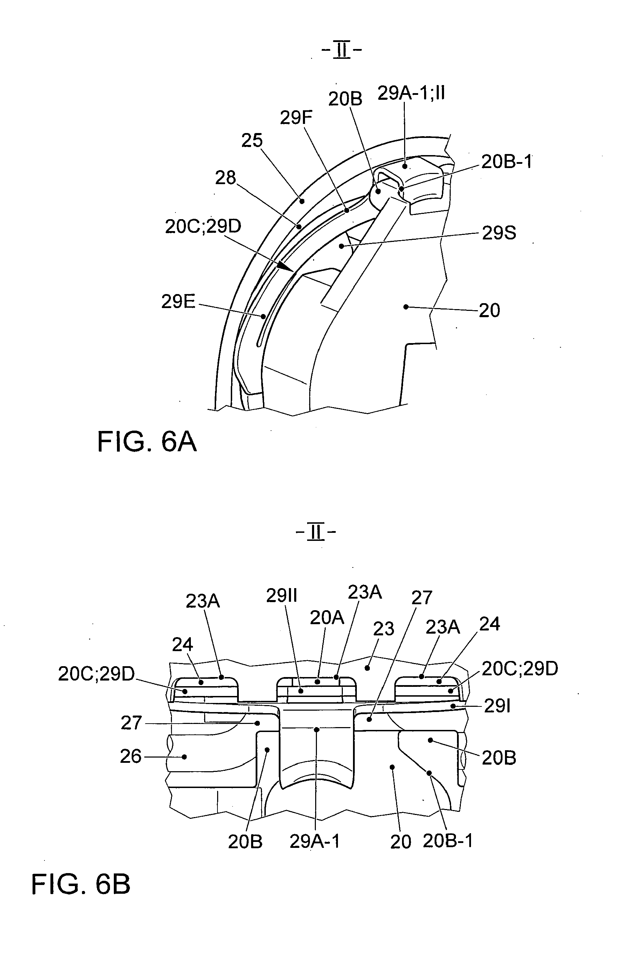

Eine perspektivische Ansicht (Figur 6A) und eine Draufsicht (Figur 6B) zeigen den Ver- und Entriegelungsbereich des Lehneneinstellbeschlages 10 in seinem Entriegelungszustand II. Ausgehend von der Ursprungslage haben die Keilsegmente 24 gegenüber dem Ausschnitt 29C des Sperrelementes 29 bis zur Sperrlage einen geringen Bewegungsspielraum zur Verstellung des Lehneneinstellbeschlages 10 in die eine oder in die andere Richtung. Bei der Verstellung des Lehneneinstellbeschlages 10, beispielsweise in Urzeigerrichtung nach rechts, kann somit der Mitnehmer 20 im Rahmen des erwähnten Bewegungsspielraumes nach rechts bewegt werden, ohne dass das Sperrelement 29 eine leichte Bewegung des Mitnehmers 20 und damit zunächst des rechten Keilsegmentes 24 in Uhrzeigerrichtung verhindert.

In diesem Moment greift die Mitnehmersperrnase 20B (vergleiche Figur 5A zu Figur 6A) in Folge der Bewegung des Mitnehmers 20 in Uhrzeigerrichtung in die U-Kontur 29A-1 des Sperrriegels 29A ein.

Beide Mitnehmersperrnasen 20B weisen eine Rampe 20B-1, in der Art einer Anlaufschräge auf.

Die Anlaufschräge verläuft schräg in axialer Richtung, so dass der flexible Bereich 29F des Sperrelementes 29 in axialer Richtung verlagerbar ist. Fährt die Mitnehmersperrnase 20B mit ihrer Rampe 20B-1 in die U-Kontur 29A-1 ein, wird der flexible Bereich 29F des Sperrelementes 29 demzufolge in axialer Richtung um einen Schwenkwinkel α (Figur 3D) verschwenkt.

Die Rampe 20B-1 greift an der Innenseite des endseitig in radialer Richtung des Lehneneinstellbeschlages 10 in radiale Richtung zur Längsachse Y des Lehneneinstellbeschlages 10 hin umgebogenen Bereich des Sperrriegels 29A-1 ein und verlagert den Sperrriegel 29A in axialer Richtung, wodurch der flexible Bereich 29F des Sperrelementes 29 mitgenommen wird. Die bei der Verstellung in den Sperrriegel 29A-1 eingeleitete Kraft wird im Entriegelungszustand II, dort wo sich der flexible Bereich 29F in Folge der axialen Verlagerung des Sperrriegels 29A des Sperrelementes 29 gegenüber dem starren Bereich 29S des Sperrelementes 29 verbiegt, im flexiblen Bereich 29F des Sperrelementes 29 gespeichert.

Die Kraft zur Verlagerung des flexiblen Bereiches 29F des Sperrriegels 29A in axialer Richtung wird somit durch die Betätigung des Lehneneinstellbeschlages 10 aufgebracht und von dem Exenterantriebsmittel 14 auf den Mitnehmer 20 übertragen, der die Betätigungskraft über die jeweilige Mitnehmersperrnase 20, in tangentialer Richtung zum halbkreisförmigen Sperrelement 29 gesehen, über die Rampe 20B-1 in die U-Kontur 29A-1 des Sperrriegels 29A einleitet. Die eingeleitete Kraft wird als Rückstellkraft des Sperrelementes 29 im flexiblen Bereich 29F des Sperrelementes 29 gespeichert. Da sich der flexible Bereich 29F des Sperrelementes 19 in axialer Richtung verschwenkt und in der Lage ist den Lehneneinstellbeschlag 10 zu sperren, wird das beschriebene System als Axialsperrsystem bezeichnet.

Der starre Bereich 29S ist durch Anlageflächen der Anlagebereiche 20C des Mitnehmers 20 gesichert. Der Mitnehmer 20 bildet auf seiner zu dem Sperrelement 29, insbesondere zu dem unteren Bereich des Sperrelementes 29 gerichteten Seite Anlageflächen in dafür vorgesehenen Anlagebereichen 20C aus. Die im Sperrelement 29 dem Anlagebereich 20C des Mitnehmers 20 gegenüber liegenden Anlagebereiche 29D des Sperrelementes 29 wurden bereits erläutert. Im zusammengebauten Zustand des Lehneneinstellbeschlages 10 verhindert der Mitnehmer 20 somit, dass während der Betätigung des Lehneneinstellbeschlages 10 eine Verformung des starren Bereiches 29S des Sperrelementes 29 erfolgt.

In der Draufsicht gemäß Figur 6B ist gegenüber Figur 5B leicht erkennbar, wie die Mitnehmersperrnase 20B mit ihrer Rampe 20B-1 in die U-Kontur 29A-1 des Sperrriegels 29A eingefahren ist. Der Sperrriegel 29A steht gemäß Figur 6B nicht mehr mit der Aussparung 23A der Distanzkrone 23 im Eingriff, so dass der Lehneneinstellbeschlag 10 ausgehend von der Ursprungslage, wie gewünscht über die Sperrlage hinaus, das heißt unter Überwindung der Sperrlage, in die eine oder in die andere Richtung verstellt werden kann. Anhand der Bezugszeichen 20C und 29D sind die Anlagebereiche zwischen dem Mitnehmer 20 und dem starren Teil 29S des Sperrelementes 29 in Figur 6B gekennzeichnet. Die weitere Verstellung des Lehneneinstellbeschlages 10 erfolgt ohne, dass sich der Sperrriegel 29 im Eingriff befindet, wodurch in vorteilhafter Weise eine besonders geräuscharme Verstellung des Lehneneinstellbeschlages 10 erreicht wird.

Die Figur 6C zeigt eine vergrößerte Schnittdarstellung im Bereich des Sperrelementes in einer in Längsrichtung des Lehneneinstellbeschlages 10 liegenden Schnittebene mit Darstellung des Sperrelementes 29 in seinem Ver- und Entriegelungszustand I und II.

Verriegelungszustand I (durchgehende Linie des Sperrelementes 29): In der Verriegelungsposition 29A-1; I liegt der an dem flexiblen Bereich 29F angeordnete distanzkronenseitige radiale Bereich der U-Kontur 29A-1 des Sperrelementes 29 in einer Aussparung 23A der Distanzkrone 23. Das Sperrelement 29 befindet sich im Eingriff.

Entriegelungszustand II (gestrichelte Linie des Sperrelementes 29): In der Entriegelungsposition 29A-1; II ist der an dem flexiblen Bereich 29F angeordnete distanzkronenseitige radiale Bereich der U-Kontur 29A-1 des Sperrelementes 29 aus einer Aussparung 23A der Distanzkrone 23 herausbewegt worden. Das Sperrelement 29 befindet sich nicht mehr im Eingriff.

Der Entriegelungszustand II wird solange aufrechterhalten, solange eine Verstellung des Lehneneinstellbeschlages 10 erfolgt. So lange eine Kraft über den Mitnehmer 20 auf das Sperrelement 29 eingeleitet wird, drückt die Rampe 20B-1 der Mitnehmersperrnase 20B die U-Kontur 29A-1 des Sperrelementes 29 aus den Aussparungen 23A der Distanzkrone 23 heraus.

Sobald diese Kraft nicht mehr aufgebracht wird, entfaltet der flexible Bereich 29F des Sperrelementes 29 die bei der Verformung des flexiblen Bereiches 29F gespeicherte Rückstellkraft. Die U-Kontur 29A-1 des Sperrelementes 29 läuft in umgekehrter Richtung als die ursprüngliche Verstellrichtung auf der Rampe 20B-1 der Mitnehmersperrnase 20B ab und der Sperrriegel 29A, 29A-1 greift wieder in die mindestens eine Aussparung 23A ein.

Falls der Sperrriegel 29A nicht direkt in die Aussparung 23A eingreift, kommt der Sperrriegel 29A neben einer Aussparung 23A auf den Vorsprüngen der Distanzkrone 23 zur Anlage und rückt unmerklich nach einer geringen Verstellbewegung der Beschlagteile 11, 12 relativ zueinander in seine im Verriegelungszustand I vorliegende Verriegelungsposition, da der Sperrriegel 29A des Sperrelementes 29 bei einer solchen Verstellbewegung über die Keilsegmente 24 und das Federelement 26 in die eine oder andere Richtung mitgenommen wird.

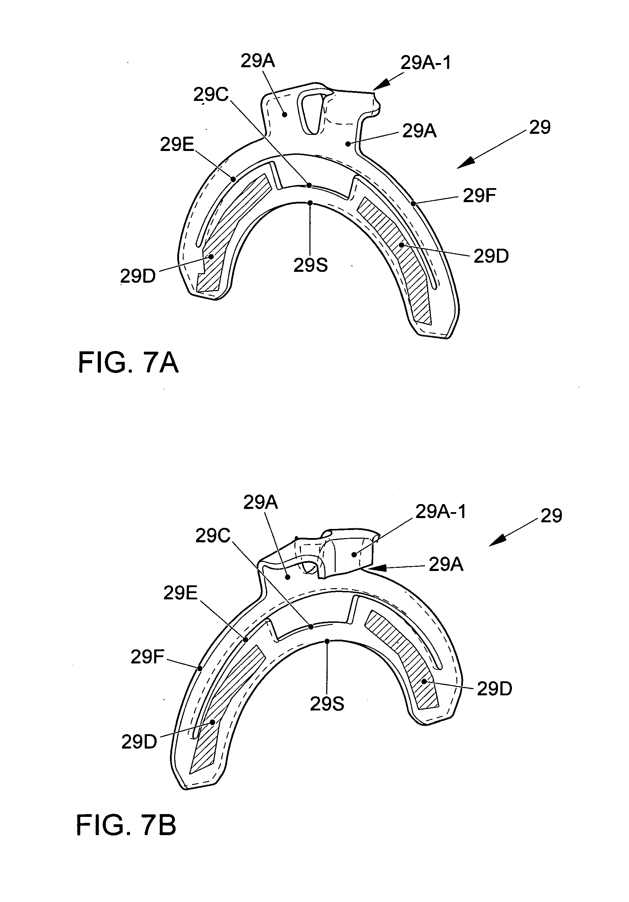

Figuren 7A und 7B zeigen jeweils eine vergrößerte perspektivische Darstellung eines weiteren Sperrelementes 29 in einer zweiten Ausführungsform jeweils in seinem Verriegelungszustand I. Figur 7A zeigt die Rückseite und Figur 7B die hier definierte Vorderseite des Sperrelementes 29. Der Unterschied zu der ersten Ausführungsform besteht darin, dass zwei Sperrriegel 29A ausgebildet sind, die gemeinsam zu einer U-Kontur 29A-1 zusammengeführt sind. Im Verriegelungszustand I greift je ein Sperrriegel 29A in je eine Aussparung 23A des Distanzelementes 23 ein. Eine erhöhte Sicherheit ist die Folge, da größere Kräfte aufgenommen werden können.

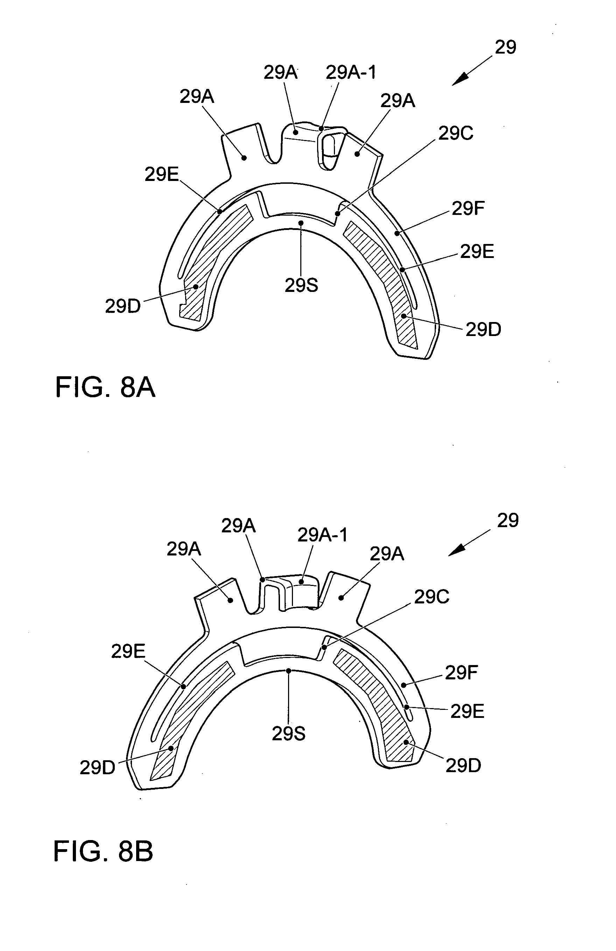

Figuren 8A und 8B zeigen jeweils eine vergrößerte perspektivische Darstellung eines weiteren Sperrelementes 29 in einer dritten Ausführungsform jeweils in seinem Verriegelungszustand I. Figur 8A zeigt wieder die Rückseite und Figur 8B wieder die Vorderseite des Sperrelementes 29. Der Unterschied zu der ersten Ausführungsform besteht darin, dass drei Sperrriegel 29A ausgebildet sind, wobei der mittlere Sperrriegel 29A die bereits beschriebene U-Kontur 29A-1 aufweist. Im Verriegelungszustand I greift je ein Sperrriegel 29A in je eine Aussparung 23A des Distanzelementes 23 ein. Eine noch weiter erhöhte Sicherheit ist die Folge, da noch größere Kräfte aufgenommen werden können.

Durch die zusätzlichen Sperrriegel 29A können somit über die Sperrelemente 29 der zweiten und dritten Ausführungsform höhere Verriegelungskräfte in die Distanzkrone 23 eingeleitet werden, da ein Eingriff von zwei oder drei ausgebildeten Sperrriegeln 29A in die Aussparungen 23A der Distanzkrone 23 möglich ist. Ferner wird die Stabilität des flexiblen Bereiches 29F des Sperrelementes 29 verbessert. Insbesondere bei der zweiten Ausführungsform wird die Stabilität der beiden miteinander verbundenen Sperrriegel 29A positiv beeinflusst.

### Bezugszeichenliste

- 10: Beschlag, Lehneneinstellbeschlag
- 11: erstes Beschlagteil
- 11A: erste Adapterplatte
- 12: zweites Beschlagteil
- 12A: zweite Adapterplatte
- 13: erste Gleitlagerbuchse
- 14: Exzenterantriebsmittel
- 15: Stirnzahnrad
- 16: Außenverzahnung
- 17: Hohlzahnkranz
- 18: Innenverzahnung
- 19: erster Kragenzug (11)
- rₐ₁₉: Außenradius des ersten Kragenzuges
- 20: Mitnehmer
- 20A: Mitnehmersegment
- 20B: Mitnehmersperrnase
- 20B-1: Rampe
- 20C: Anlagebereich
- 21: Nabe
- 22: Dichtung
- 23: Distanzelement (Distanzring mit Krone/Distanzkrone)
- 23A: Aussparung
- 23B: Rand
- rᵢ₂₃: Innenradius des Distanzelementes
- rₐ₂₃: Außenradius des Distanzelementes
- 24: Keilsegmente
- rᵢ₂₄: Innenradius der Keilsegmente
- rₐ₂₄: Außenradius der Keilsegmente
- 25: zweiter Kragenzug (12)
- rᵢ₂₅: Innenradius des zweiten Kragenzuges
- rₐ₂₅: Außenradius des zweiten Kragenzuges
- 26: Ringfeder
- 27: Federschenkel
- 28: zweite Gleitlagerbuchse
- rᵢ₂₈: Innenradius der zweiten Gleitlagerbuchse
- rₐ₂₈: Außenradius der zweiten Gleitlagerbuchse
- 29: Sperrelement
- 29F: flexibler Bereich
- 29S: starrer Bereich
- 29A: Sperrriegel
- rₐ₂₉: Außenradius des Sperrriegels
- rᵢ₂₉: Außenradius des Sperrriegels
- 29A-1: U-Kontur
- 29B: Sperrriegelarm
- 29C: Ausschnitt
- 29D: Anlagebereich
- 29E: Nut
- 30: Abdeckscheibe
- Y: Schwenkachse des Lehneneinstellbeschlages (Längsachse)
- α: Sperrelement-Schwenkwinkel
- I: Verriegelungszustand
- II: Entriegelungszustand

## Patentansprüche

1. Beschlag (10), insbesondere Lehneneinstellbeschlag für einen Fahrzeugsitz, umfassend ein erstes, scheibenförmiges Beschlagteil (11), an welchem ein Hohlzahnkranz (17) ausgebildet ist, und ein relativ zum ersten Beschlagteil (11) um eine axiale Längsachse (Y) des Beschlages (10) verdrehbares zweites scheibenförmiges Beschlagteil (12), an welchem ein Stirnzahnrad (15) ausgebildet ist, welches sich an dem Hohlzahnkranz (17) abwälzt, wodurch die beiden Beschlagteile (11, 12) miteinander mittels Keilsegmenten (24) zur Sicherstellung einer exzentrischen Anordnung des Hohlzahnkranzes (17) relativ zum Stirnzahnrad (15) in Getriebeverbindung stehen, und einen auf die Keilsegmente (24) einwirkenden drehbar gelagerten von einem Exzenterantriebsmittel (14) angetriebenen Mitnehmer (20) zum Antrieb einer exzentrischen Abwälzbewegung von Stirnzahnrad (15) und Hohlzahnkranz (17), wobei ausgehend von der Längsachse (Y) in radialer Richtung des Beschlages (10) zwischen einem Innenradius (rᵢ₂₅) des zweiten Beschlagteiles (12) und einem Außenradius (rₐ₂₄) der Keilsegmente (24) ein Distanzelement (23) angeordnet ist, welches zumindest in axialer Richtung offene Aussparungen (23A) aufweist, wobei in mindestens eine Aussparung (23A) in einem den Ablauf des Beschlages (10) sichernden Verriegelungszustand (I) mindestens ein radial über den Außenradius (rₐ₂₄) der Keilsegmente (24) hinausgeführter Sperrriegel (29A) eines Sperrelementes (29) eingreift, **dadurch gekennzeichnet, dass** der Sperriegel (29A) an einem in das Sperrelement (29) integrierten flexiblen Bereich (29F) angeordnet ist, wodurch der mindestens eine Sperrriegel (29) mittels am Mitnehmer (20) angeordneten Mitnehmersperrnasen (20B) unter Verformung des sich als Rückstellkraftspeicher bildenden flexiblen Bereiches (29F) des Sperrelementes (29) unter Bewirkung eines Entriegelungszustandes (II) des Beschlages (10) in axialer Richtung aus der mindestens einen Aussparung (23A) des Distanzelementes (23) ausrückt.

2. Beschlag nach Anspruch 1, **dadurch gekennzeichnet, dass** das Distanzelement (23) in einen zweiten Kragenzug (25) des zweiten Beschlagteiles (12) eingepresst ist.

3. Beschlag nach Anspruch 1, **dadurch gekennzeichnet, dass** sich das mindestens eine Sperrelement (29) mit seinem Innenradius (rᵢ₂₉), in einer benachbarten radialen Ebene zu den Keilsegmenten (24) liegend, zwischen einem Innenradius (rᵢ₂₄) der Keilsegmente (24) und einem Außenradius (rₐ₂₃) des Distanzelementes (23) erstreckt, wobei das Sperrelement (29) in seiner größten durch den Sperrriegel (29A) des Sperrelementes (29) gebildeten radialen Ausdehnung einen Außenradius (rₐ₂₉) aufweist, der nahezu dem Außenradius (rₐ₂₃) des Distanzelementes (23) entspricht, wobei die Aussparungen (23A) des Distanzelementes (23) gegenüber den Keilsegmenten (24) einen umlaufenden Rand (23B) bilden, der die Keilsegmente (24) in axialer Richtung des Beschlages (10) überragt.

4. Beschlag nach Anspruch 1 und 3, **dadurch gekennzeichnet, dass** ein starrer Bereich (29S) und der flexible Bereich (29F) des Sperrelementes (29) mit seinem Sperrriegel (29A) im Verriegelungszustand (I) vollständig in der zu den Keilsegmenten (24) benachbarten radialen Ebene und im Entriegelungszustand (II) nur teilweise in der zu den Keilsegmenten (24) benachbarten radialen Ebene des Distanzelementes (23) liegt, da der flexible Bereich (29F) im Entriegelungszustand (II) mit seinem daran angeordneten Sperrriegel (29A) axial aus der radialen Ebene ausrückt.

5. Beschlag nach Anspruch 4, **dadurch gekennzeichnet, dass** der flexible Bereich (29F) des Sperrelementes (29) mit dem daran angeordneten mindestens einen Sperrriegel (29A) gegenüber dem starren Bereich (29S) um einen Schwenkwinkel (α) aus dem Verriegelungszustand (I) in axialer Richtung reversibel in den Entriegelungszustand (II) bewegbar ist.

6. Beschlag nach einem der Ansprüche 1 bis 5, **dadurch gekennzeichnet, dass** der mindestens eine Sperrriegel (29A) des Sperrelementes (29) eine U-Kontur (29A-1) aufweist, die in axialer Richtung des Beschlages (10) auskragt, wobei die U-Kontur (29A-1) in radialer Richtung des Beschlages (10) zur Längsachse (Y) des Beschlages (10) hin offen ist.

7. Beschlag nach Anspruch 1, **dadurch gekennzeichnet, dass** die Mitnehmersperrnasen (20B) des Mitnehmers (20) in horizontaler Richtung quer zur axialen Längsrichtung (Y) des Beschlages (10) ausgerichtet sind und im Entriegelungszustand (II), bezüglich des kreisförmigen flexiblen Bereiches (29F) des Sperrelementes (29) aus tangentialer Richtung kommend, über eine Rampe (20B-1) in die U-Kontur (29A-1) des Sperrriegels (29A) des Sperrelementes (29) eingreifen, wodurch der Sperrriegel (29A) mittels der Rampe (20B-1) in axialer Richtung aus den Aussparungen (23A) des Distanzelementes (23) ausrückt.

8. Beschlag nach Anspruch 1, **dadurch gekennzeichnet, dass** der Mitnehmer (20) in Anlagebereichen (20C) Anlageflächen ausbildet, denen in einem starren Bereich (29S) des Sperrelementes (29) Anlageflächen in Anlagebereichen (29D) axial gegenüber liegen, wodurch der starre Bereich (29S) des Sperrelementes (29) gegenüber dem flexiblen Bereich (29F) des Sperrelementes (29) axial gesichert ist.

9. Beschlag nach Anspruch 1, **dadurch gekennzeichnet, dass** das Sperrelement (29) im flexiblen Bereich (29F) des Sperrelementes (29) einen oder mehrere mit im Wesentlichen der Form der Aussparungen (23A) korrespondierenden/e Sperrriegel (29A-1) aufweist.

10. Beschlag nach Anspruch 9, **dadurch gekennzeichnet, dass** zwei Sperrriegel (29A) zu einer U-Kontur (29A-1) zusammengeführt sind.

11. Beschlag nach Anspruch 1, **dadurch gekennzeichnet, dass** in radialer Richtung gesehen zwischen dem Distanzelement (23) und den Keilsegmenten (24) eine Gleitlagebuchse (28) angeordnet ist, dessen (23) Innenradius (rᵢ₂₃) dann mit dem Außenradius (rₐ₂₈) der zweiten Gleitlagebuchse (28) und deren (28) Innenradius (rᵢ₂₈) dann mit dem Außenradius (rₐ₂₄) der Keilsegmente (24) übereinstimmt

12. Beschlag nach Anspruch 11, **dadurch gekennzeichnet, dass** sich das mindestens eine Sperrelement (29) mit seinem Innenradius (rᵢ₂₉), in einer benachbarten radialen Ebene zu der Gleitlagerbuchse (28) und den Keilsegmenten (24) liegend, zwischen einem Innenradius (rᵢ₂₄) der Keilsegmente (24) und einem Außenradius (rₐ₂₃) des Distanzelementes (23) erstreckt, wobei das Sperrelement (29) in seiner größten durch den Sperrriegel (29A) des Sperrelementes (29) gebildeten radialen Ausdehnung einen Außenradius (rₐ₂₉) aufweist, der nahezu dem Außenradius (rₐ₂₃) des Distanzelementes (23) entspricht, wobei die Aussparungen (23A) des Distanzelementes (23) gegenüber den der Gleitlagerbuchse (28) und den Keilsegmenten (24) einen umlaufenden Rand (23B) bilden, der die Gleitlagebuchse (28) und die Keilsegmente (24) in axialer Richtung des Beschlages (10) überragt.

## Claims

1. Fitting (10), in particular backrest setting fitting for a vehicle seat, comprising a first disc-like fitting part (11) on which a hollow toothed ring (17) is formed, and comprising a second disc-like fitting part (12) which can be rotated about an axial longitudinal axis (Y) of the fitting (10) relative to the first fitting part (11) and on which a spur gear (15) is formed, the said spur gear (15) rolling on the hollow toothed ring (17), as a result of which the two fitting parts (11, 12) form a gear connection with one another by means of wedge segments (24) in order to ensure eccentric arrangement of the hollow toothed ring (17) relative to the spur gear (15), and comprising a driver (20), which acts on the wedge segments (24), is mounted in a rotatable manner and is driven by an eccentric drive means (14), for driving an eccentric rolling movement of spur gear (15) and hollow toothed ring (17), wherein, starting from the longitudinal axis (Y), a spacer element (23) is arranged between an inner radius (rᵢ₂₅) of the second fitting part (12) and an outer radius (rₐ₂₄) of the wedge segments (24) in the radial direction of the fitting (10), the said spacer element having cutouts (23A) which are open at least in the axial direction, wherein at least one blocking bolt (29A) of a blocking element (29), which blocking bolt is guided radially beyond the outer radius (rₐ₂₄) of the wedge segments (24), engages into at least one cutout (23A) in a locking state (I) which prevents the fitting (10) from running, **characterized in that** the blocking bolt (29A) is arranged on a flexible region (29F) which is integrated into the blocking element (29), as a result of which the at least one blocking bolt (29) moves out of the at least one cutout (23A) in the spacer element (23) in the axial direction by means of driver blocking lugs (20B) which are arranged on the driver (20), with deformation of the flexible region (29F) of the blocking element (29), which flexible region is formed as a restoring force accumulator, so as to produce an unlocking state (II) of the fitting (10).

2. Fitting according to Claim 1, **characterized in that** the spacer element (23) is pressed into a second drawn collar (25) of the second fitting part (12).

3. Fitting according to Claim 1, **characterized in that** the at least one blocking element (29) extends by way of its inner radius (rᵢ₂₉), so as to lie in an adjacent radial plane to the wedge segments (24), between an inner radius (rᵢ₂₄) of the wedge segments (24) and an outer radius (rₐ₂₃) of the spacer element (23), wherein the blocking element (29) has, in its largest radial extent which is formed by the blocking bolt (29A) of the blocking element (29), an outer radius (rₐ₂₉) which corresponds virtually to the outer radius (rₐ₂₃) of the spacer element (23), wherein the cutouts (23A) in the spacer element (23) form a circumferential edge (23B) in relation to the wedge segments (24), the said circumferential edge projecting beyond the wedge segments (24) in the axial direction of the fitting (10).

4. Fitting according to Claims 1 and 3, **characterized in that** a rigid region (29S) and the flexible region (29F) of the blocking element (29) are situated, with the blocking bolt (29A) of the said blocking element, fully in the radial plane, which is adjacent to the wedge segments (24), in the locking state (I) and only partially in the radial plane of the spacer element (23), which radial plane is adjacent to the wedge segments (24), in the unlocking state (II), since the flexible region (29F) moves axially out of the radial plane by way of its blocking bolt (29A), which is arranged on the said flexible region, in the unlocking state (II).

5. Fitting according to Claim 4, **characterized in that** the flexible region (29F) of the blocking element (29), by way of the at least one blocking bolt (29A) which is arranged on it, can be moved from the locking state (I) to the unlocking state (II) reversibly in the axial direction in relation to the rigid region (29S) about a pivot angle (α).

6. Fitting according to one of Claims 1 to 5, **characterized in that** the at least one blocking bolt (29A) of the blocking element (29) has a U-contour (29A-1) which projects in the axial direction of the fitting (10), wherein the U-contour (29A-1) is open towards the longitudinal axis (Y) of the fitting (10) in the radial direction of the fitting (10).

7. Fitting according to Claim 1, **characterized in that** the driver blocking lugs (20B) of the driver (20) are oriented in the horizontal direction transverse to the axial longitudinal direction (Y) of the fitting (10) and, in the unlocking state (II), in relation to the circular flexible region (29F) of the blocking element (29) arriving from the tangential direction, engage into the U-contour (29A-1) of the blocking bolt (29A) of the blocking element (29) by means of a ramp (20B-1), as a result of which the blocking bolt (29A) moves out of the cutouts (23A) in the spacer element (23) by means of the ramp (20B-1) in the axial direction.

8. Fitting according to Claim 1, **characterized in that** the driver (20) forms contact faces in contact regions (20C), contact faces in contact regions (29D) being situated axially opposite the said contact faces in contact regions (20C) in a rigid region (29S) of the blocking element (29), as a result of which the rigid region (29S) of the blocking element (29) is axially secured in relation to the flexible region (29F) of the blocking element (29).

9. Fitting according to Claim 1, **characterized in that** the blocking element (29) has one or more blocking bolt or bolts (29A-1) which corresponds/correspond substantially to the shape of the cutouts (23A) in the flexible region (29F) of the blocking element (29).

10. Fitting according to Claim 9, **characterized in that** two blocking bolts (29A) are combined to form a U-contour (29A-1).

11. Fitting according to Claim 1, **characterized in that** a plain bearing bushing (28) is arranged between the spacer element (23) and the wedge segments (24) as seen in the radial direction, the inner radius (rᵢ₂₃) of the said spacer element (23) then corresponding to the outer radius (rₐ₂₈) of the second plain bearing bushing (28), and the inner radius (rᵢ₂₈) of the said plain bearing bushing (28) then corresponding to the outer radius (rₐ₂₄) of the wedge segments (24).

12. Fitting according to Claim 11, **characterized in that** the at least one blocking element (29) extends by way of its inner radius (rᵢ₂₉), so as to lie in an adjacent radial plane to the plain bearing bushing (28) and the wedge segments (24), between an inner radius (rᵢ₂₄) of the wedge segments (24) and an outer radius (rₐ₂₃) of the spacer element (23), wherein the blocking element (29) has, in its largest radial extent which is formed by the blocking bolt (29A) of the blocking element (29), an outer radius (rₐ₂₉) which corresponds virtually to the outer radius (rₐ₂₃) of the spacer element (23), wherein the cutouts (23A) in the spacer element (23) form a circumferential edge (23B) in relation to the plain bearing bushing (28) and the wedge segments (24), the said circumferential edge projecting beyond the plain bearing bushing (28) and the wedge segments (24) in the axial direction of the fitting (10).

## Revendications

1. Ferrure (10), en particulier ferrure de réglage de dossier pour un siège de véhicule, comprenant une première partie de ferrure en forme de disque (11) au niveau de laquelle est réalisée une couronne dentée creuse (17), et une deuxième partie de ferrure en forme de disque (12) pouvant tourner par rapport à la première partie de ferrure (11) autour d'un axe longitudinal axial (Y) de la ferrure (10), au niveau de laquelle deuxième partie de ferrure est réalisé un pignon droit (15) qui roule sur la couronne dentée creuse (17), de sorte que les deux parties de ferrure (11, 12) soient en liaison d'engrènement l'une avec l'autre au moyen de segments clavetés (24) pour garantir un agencement excentrique de la couronne dentée creuse (17) par rapport au pignon droit (15), et un dispositif d'entraînement (20) supporté à rotation, agissant sur les segments clavetés (24), entraîné par un moyen d'entraînement excentrique (14), pour l'entraînement d'un mouvement de roulement excentrique du pignon droit (15) et de la couronne dentée creuse (17), un élément d'espacement (23) étant disposé entre un rayon intérieur (rᵢ₂₅) de la deuxième partie de ferrure (12) et un rayon extérieur (rₐ₂₄) des segments clavetés (24), partant de l'axe longitudinal (Y) dans la direction radiale de la ferrure (10), lequel élément d'espacement présente des évidements ouverts (23A) au moins dans la direction axiale, au moins un verrou (29A) d'un élément de blocage (29) guidé radialement au-delà du rayon extérieur (rₐ₂₄) des segments clavetés (24) s'engageant dans au moins un évidement (23A) dans un état de verrouillage (I) fixant le roulement de la ferrure (10), **caractérisée en ce que** le verrou (29A) est disposé au niveau d'une région (29F) flexible intégrée dans l'élément de blocage (29), de sorte que l'au moins un verrou (29) ressorte de l'au moins un évidement (23A) de l'élément d'espacement (23) au moyen d'ergots de blocage d'entraînement (20B) disposés sur le dispositif d'entraînement (20), en déformant la région flexible (29F) de l'élément de blocage (29) formée sous forme d'accumulateur de force de rappel et en causant un état de déverrouillage (II) de la ferrure (10) dans la direction axiale.

2. Ferrure selon la revendication 1, **caractérisée en ce que** l'élément d'espacement (23) est pressé dans un deuxième col formé par étirage (25) de la deuxième partie de ferrure (12).

3. Ferrure selon la revendication 1, **caractérisée en ce que** l'au moins un élément de blocage (29) s'étend avec son rayon intérieur (rᵢ₂₉) situé dans un plan radial adjacent aux segments clavetés (24) entre un rayon intérieur (rᵢ₂₄) des segments clavetés (24) et un rayon extérieur (rₐ₂₃) de l'élément d'espacement (23), l'élément de blocage (29) présentant, dans son étendue radiale maximale formée par le verrou (29A) de l'élément de blocage (29), un rayon extérieur (rₐ₂₉) qui correspond approximativement au rayon extérieur (rₐ₂₃) de l'élément d'espacement (23), les évidements (23A) de l'élément d'espacement (23) formant par rapport aux segments clavetés (24) un bord périphérique (23B) qui fait saillie au-delà des segments clavetés (24) dans la direction axiale de la ferrure (10).

4. Ferrure selon les revendications 1 et 3, **caractérisée en ce qu'**une région rigide (29S) et la région flexible (29F) de l'élément de blocage (29) avec son verrou (29A), dans l'état de verrouillage (I), se situent complètement dans le plan radial adjacent aux segments clavetés (24) et, dans l'état de déverrouillage (II), se situent seulement partiellement dans le plan radial de l'élément d'espacement (23) adjacent aux segments clavetés (24), car la région flexible (29F), dans l'état de déverrouillage (II), avec son verrou (29A) disposé sur celle-ci, ressort axialement hors du plan radial.

5. Ferrure selon la revendication 4, **caractérisée en ce que** la région flexible (29F) de l'élément de blocage (29) peut être déplacée avec l'au moins un verrou (29A) disposé sur celle-ci par rapport à la région rigide (29S) autour d'un angle de pivotement (α) hors de l'état de verrouillage (I) de manière réversible dans la direction axiale dans l'état de déverrouillage (II).

6. Ferrure selon l'une quelconque des revendications 1 à 5, **caractérisée en ce que** l'au moins un verrou (29A) de l'élément de blocage (29) présente un contour en U (29A-1), lequel est en saillie dans la direction axiale de la ferrure (10), le contour en U (29A-1) étant ouvert dans la direction radiale de la ferrure (10) vers l'axe longitudinal (Y) de la ferrure (10).

7. Ferrure selon la revendication 1, **caractérisée en ce que** les ergots de blocage d'entraînement (20B) du dispositif d'entraînement (20) sont orientés dans la direction horizontale transversalement à la direction longitudinale axiale (Y) de la ferrure (10) et, dans l'état de déverrouillage (II), s'engagent par le biais d'une rampe (20B-1) dans le contour en U (29A-1) du verrou (29A) de l'élément de blocage (29) en provenant de la direction tangentielle par rapport à la région flexible circulaire (29F) de l'élément de blocage (29), de sorte que le verrou (29A) ressorte au moyen de la rampe (20B-1) dans la direction axiale hors des évidements (23A) de l'élément d'espacement (23).

8. Ferrure selon la revendication 1, **caractérisée en ce que** le dispositif d'entraînement (20) forme, dans des régions d'appui (20C), des surfaces d'appui auxquelles sont axialement opposées, dans une région rigide (29S) de l'élément de blocage (29), des surfaces d'appui dans des régions d'appui (29D), de sorte que la région rigide (29S) de l'élément de blocage (29) soit fixée axialement par rapport à la région flexible (29F) de l'élément de blocage (29).

9. Ferrure selon la revendication 1, **caractérisée en ce que** l'élément de blocage (29) présente, dans la région flexible (29F) de l'élément de blocage (29), un ou plusieurs verrous (29A-1) correspondant essentiellement à la forme des évidements (23A).

10. Ferrure selon la revendication 9, **caractérisée en ce que** deux verrous (29A) sont assemblés pour former un contour en U (29A-1).

11. Ferrure selon la revendication 1, **caractérisée en ce que**, vu dans la direction radiale entre l'élément d'espacement (23) et les segments clavetés (24), est disposée une douille de palier lisse (28), le rayon intérieur (rᵢ₂₃) de l'élément d'espacement (23) coïncidant alors avec le rayon extérieur (rₐ₂₈) de la deuxième douille de palier lisse (28) et le rayon intérieur (rᵢ₂₈) de la douille de palier lisse (28) coïncidant alors avec le rayon extérieur (rₐ₂₄) des segments clavetés (24).

12. Ferrure selon la revendication 11, **caractérisée en ce que** l'au moins un élément de blocage (29) s'étend avec son rayon intérieur (rᵢ₂₉), situé dans un plan radial adjacent à la douille de palier lisse (28) et aux segments clavetés (24), entre un rayon intérieur (rᵢ₂₄) des segments clavetés (24) et un rayon extérieur (rₐ₂₃) de l'élément d'espacement (23), l'élément de blocage (29) présentant, dans son étendue radiale maximale formée par le verrou (29A) de l'élément de blocage (29), un rayon extérieur (rₐ₂₉) qui correspond approximativement au rayon extérieur (rₐ₂₃) de l'élément d'espacement (23), les évidements (23A) de l'élément d'espacement (23) formant, par rapport à la douille de palier lisse (28) et par rapport aux segments clavetés (24), un bord périphérique (23B) qui fait saillie dans la direction axiale de la ferrure (10) au-delà de la douille de palier lisse (28) et des segments clavetés (24).
